# EUROPÄISCHE PATENTSCHRIFT

(11) **EP 3 158 623 B1**
(45) Veröffentlichungstag und Bekanntmachung des Hinweises auf die Patenterteilung: **26.02.2020**
(21) Anmeldenummer: 14755626.0
(22) Anmeldetag: 14.08.2014
(51) Int. Cl.: H02J 13/00, G05B 23/02, G08C 17/02, G08B 25/00, H04W 4/00, G05B 15/02

(54) **VERFAHREN UND SYSTEM ZUM BEOBACHTEN DES BETRIEBSZUSTANDS EINES ENERGIEVERSORGUNGSNETZES**
METHOD AND SYSTEM FOR MONITORING THE OPERATING STATE OF AN ENERGY SUPPLY NETWORK
PROCÉDÉ ET SYSTÈME D'OBSERVATION DE L'ÉTAT DE FONCTIONNEMENT D'UN RÉSEAU D'ALIMENTATION EN ÉNERGIE

(43) Veröffentlichungstag der Anmeldung: 26.04.2017
(73) Patentinhaber: Siemens Aktiengesellschaft, 80333 München (DE)
(72) Erfinder: FRÖHNER, Wiebke, 92224 Amberg (DE); WERNER, Thomas, 91126 Rednitzhembach (DE)
(86) Internationale Anmeldenummer: PCT/EP2014/067409
(87) Internationale Veröffentlichungsnummer: WO 2016/023585

(56) Entgegenhaltungen:
- WO-A1-2013/107704
- DE-A1-102010 044 186
- US-A1- 2010 013 632
- US-A1- 2013 064 178

## Beschreibung

Die Erfindung betrifft ein Verfahren zum Beobachten des Betriebszustands eines Energieversorgungsnetzes, bei dem mittels Sensoren, die an Primärkomponenten des Energieversorgungsnetzes zugeordneten Messstellen vorgesehen sind, einen Betriebszustand des Energieversorgungsnetzes angebende Messwerte erfasst werden und basierend auf den Messwerten oder davon abgeleiteten Werten mittels einer Beobachtungseinrichtung des Betreibers des Energieversorgungsnetzes eine den Betriebszustand des Energieversorgungsnetzes an der Messstelle des jeweiligen Sensors angebende Visualisierung erzeugt wird, wobei ein Applikationsserver vorgesehen ist, dessen Betreiber vom Betreiber des Energieversorgungsnetzes verschieden ist; die Sensoren dazu eingerichtet sind, die Messwerte oder davon abgeleiteten Werte zunächst an den Applikationsserver zu übermitteln; der Applikationsserver dazu eingerichtet ist, eine Auswertung und/oder eine Bearbeitung der Messwerte oder der daraus abgeleiteten Werte unter Bildung von System-Statuswerten, die den Betriebszustand des Energieversorgungsnetzes an der Messstelle des jeweiligen Sensors angeben, vorzunehmen; der Applikationsserver auch dazu eingerichtet ist, die System-Statuswerte an die Beobachtungseinrichtung des Betreibers des Energieversorgungsnetzes zu übermitteln; und die Beobachtungseinrichtung dazu eingerichtet ist, anhand der von dem Applikationsserver empfangenen System-Statuswerte die den Betriebszustand des Energieversorgungsnetzes an der Messstelle des jeweiligen Sensors angebende Visualisierung zu erzeugen und anzuzeigen.

Die Erfindung betrifft auch ein entsprechendes System zum Beobachten eines Energieversorgungsnetzes mit solchen Sensoren und einer solchen Beobachtungseinrichtung.

Ein solches Verfahren und ein solches System gehen beispielsweise aus der US 2013/064178 A1 hervor. Die US 2010/013632 A1 zeigt ein System mit mehreren Fehlerindikatoren. Die WO 2013/107704 A1 beschreibt den Betrieb eines Feldgeräts in einem weitflächigen Automatisierungsnetz. Außerdem beschreibt die DE 10 2010 044 186 A1 ein Verfahren zur Bereitstellung einer Feldgerätetyp-übergreifenden Diagnosemeldung.

Die Erfindung kann sich dabei auf verschiedene Arten von Energieversorgungsnetzen beziehen, z.B. auf elektrische Energieversorgungsnetze oder Verteilnetze von Gas, Öl, Wärme (Dampf, Wasser) oder Druckluft. Nachfolgend wird die Erfindung lediglich beispielhaft mit Bezugnahme auf elektrische Energieversorgungsnetze beschrieben.

Elektrische Energieversorgungsnetze dienen zur Übertragung und Verteilung elektrischer Energie vom Erzeuger bis hin zum Endverbraucher. Eine wichtige Aufgabe eines Betreibers eines Energieversorgungsnetzes ist die Sicherung und Verbesserung der Zuverlässigkeit der Versorgung des Endverbrauchers mit elektrischer Energie. Es liegt daher in seinem Interesse, etwaige Ausfallzeiten der Versorgung mit elektrischer Energie (beispielsweise als Folge von Kurzschlüssen oder Erdschlüssen im Energieversorgungsnetz) zu reduzieren. Bevor ein in einem Energieversorgungsnetz aufgetretener Fehler behoben werden kann, muss der Betreiber des Energieversorgungsnetzes zum Einen zunächst erkennen, dass im Energieversorgungsnetz überhaupt ein Fehler vorliegt. Zum Anderen benötigt auch die sich anschließende Lokalisierung des Fehlers eine gewisse Zeit. Der Betreiber des Energieversorgungsnetzes ist neben der raschen Behebung eines Fehlers daher vornehmlich daran interessiert, diese beiden Vorgänge, nämlich die Erkennung und die Lokalisierung eines Fehlers, zu beschleunigen.

Während in Übertragungsnetzen der Hochspannungsebene sowie in einigen Verteilnetzen der höheren Mittelspannungsebenen unter Verwendung relativ teurer Schutz-, Mess- und Stationsleitgeräte eine vergleichsweise hohe Abdeckung mittels Netzautomatisierung besteht, so dass Fehler normalerweise vergleichsweise schnell erkannt und lokalisiert werden können, sind insbesondere die Verteilnetze auf niedrigen Mittelspannungsebenen und der Niederspannungsebene vergleichsweise wenig automatisiert. Ihr aktueller Betriebszustand ist für den jeweiligen Netzbetreiber daher nur schwer zu ermitteln. Dies trifft neben den europäisch geprägten Mittel- und Niederspannungsverteilnetzen auch auf Verteilnetze in Form sogenannter Feeder-Netze gemäß US-amerikanischer Prägung zu. Klassischerweise erhält der Betreiber eines solchen Verteilnetzes Meldungen über aktuelle Stromausfälle direkt von seinen Kunden, also den Endverbrauchern. Beim Ausfall der Versorgung mit elektrischer Energie melden sich die Kunden beim Betreiber des Energieversorgungsnetzes meist telefonisch. Diese Anrufe werden gesammelt, geprüft und konsolidiert. Dieses Vorgehen allein benötigt jedoch vergleichsweise viel Zeit.

Daher sind Betreiber elektrischer Verteilnetze dazu übergegangen, die Verteilnetze mit vergleichsweise einfachen und kostengünstigen Sensoren auszustatten, die zumindest eine Beobachtung des Betriebszustands des Energieversorgungsnetzes erlauben. Ein Beispiel solcher Sensoren sind sogenannte Fehlerindikatoren (auch als "Faulted Circuit Indicator" (FCI) oder "Fault Passage Indicator" (FPI) bezeichnet), die beispielsweise eine Strommessung an ihrer Einbaustelle vornehmen und anhand des gemessenen Stroms auf einen zulässigen oder einen unzulässigen Betriebszustand schließen. Es gibt Fehlerindikatoren sowohl für Freileitungen als auch für Kabelleitungen.

Frühere Fehlerindikatoren waren lediglich in der Lage, ein lokales optisches Signal (z.B. ein Lichtsignal oder die Stellung einer Farbscheibe) abzugeben, wenn sie einen Fehlerzustand an ihrer Messstelle erkannt haben. Ein solcher Fehlerindikator ist beispielsweise aus der US-Patentschrift US 5,677,678 bekannt. Diese ausschließlich optische Anzeige zwang die Wartungsmannschaften dazu, an derjenigen Leitung entlang zu fahren, an der sie den Fehler erwarteten, bis sie an die Fehlerstelle gelangten.

Daher ist man seit einiger Zeit dazu übergegangen, Fehlerindikatoren mit Kommunikationsfähigkeit einzusetzen und diese als zusätzliche Komponenten in ein Netzleitsystem des Betreibers des Energieversorgungsnetzes einzubinden. Ein solches System ist beispielsweise aus der US-Patentschrift US 8,665,102 B2 bekannt. Bei dem hieraus bekannten System werden Fehlerindikatoren gemeinsam mit komplexeren Automatisierungsgeräten (sogenannten "Intelligent Electronic Devices" (IEDs)) in ein zentrales Überwachungssystem eingebunden. Dabei werden zusätzlich die Daten, die von den Fehlerindikatoren an das Überwachungssystem übermittelt werden, unter Verwendung der Daten, die von den IEDs geliefert werden, auf Plausibilität geprüft.

Ein Nachteil eines solchen Systems besteht jedoch in dem zusätzlichen Konfigurations- und Parametrieraufwand, der durch das Einbinden der Fehlerindikatoren in das Überwachungssystem seitens des Betreibers des Energieversorgungsnetzes anfällt. Aufgrund der vergleichsweise großen Flächenausdehnung von Verteilnetzen und deren komplexem Aufbau wird zudem eine hohe Anzahl von Fehlerindikatoren benötigt, die den Aufwand weiter in die Höhe treibt.

Ausgehend von einem Verfahren und einem System der oben genannten Art liegt der Erfindung daher die Aufgabe zugrunde, ein Verfahren und ein System zum Beobachten eines Energieversorgungsnetzes anzugeben, bei dem der Konfigurations- und Parametrieraufwand seitens des Betreibers des Energieversorgungsnetzes weitgehend minimiert wird.

Diese Aufgabe wird hinsichtlich des Verfahrens erfindungsgemäß durch ein Verfahren der eingangs genannten Art gelöst, bei dem der Applikationsserver mit einer Konfigurationseinrichtung zusammenwirkt, die bei einer Neuanschaffung eines Sensors durch den Betreiber des Energieversorgungsnetzes eine eindeutige Sensor-Kennung gemeinsam mit einer den Betreiber des Energieversorgungsnetzes angebenden Betreiber-Kennung an den Applikationsserver übermittelt; und der Sensor sich bei seiner Inbetriebnahme unter Verwendung seiner eindeutigen Sensor-Kennung beim Applikationsserver anmeldet.

Erfindungsgemäß werden die in dem Energieversorgungsnetz vorgesehenen Sensoren nicht mehr direkt mit einem Überwachungssystem des Betreibers des Energieversorgungsnetzes verbunden, so dass für diesen zunächst außer der physikalischen Installation der Sensoren an den Messstellen im Energieversorgungsnetz kein zusätzlicher Aufwand, beispielsweise für die Konfiguration oder Parametrierung des Überwachungssystems hinsichtlich des Sensors, anfällt. Stattdessen übermittelt der Sensor seine Messwerte oder die davon abgeleiteten Werte zunächst an einen Applikationsserver, der sich außerhalb des Einflussbereichs des Betreibers des Energieversorgungsnetzes befindet. Der Applikationsserver kann sich beispielsweise im Einflussbereich des Herstellers des Sensors oder eines externen Dienstleisters befinden. Der Betreiber des Applikationsservers übernimmt für den Betreiber des Energieversorgungsnetzes die kommunikationstechnische und Datentechnische Anbindung des Sensors und stellt dem Betreiber des Energieversorgungsnetzes die aufbereiteten System-Statuswerte zur Verfügung, die dieser mit seiner Beobachtungseinrichtung visualisieren kann. Die Visualisierung kann dabei in jeder beliebigen Weise erfolgen und beispielsweise grafisch, als Liste oder Tabelle oder durch eine Kombination dieser Möglichkeiten dargestellt werden.

Erfindungsgemäß ist vorgesehen, dass der Applikationsserver mit einer Konfigurationseinrichtung zusammenwirkt, die bei einer Neuanschaffung eines Sensors durch den Betreiber des Energieversorgungsnetzes eine eindeutige Sensor-Kennung gemeinsam mit einer den Betreiber des Energieversorgungsnetzes angebenden Betreiber-Kennung an den Applikationsserver übermittelt, und der Sensor sich bei seiner Inbetriebnahme unter Verwendung seiner eindeutigen Sensor-Kennung beim Applikationsserver anmeldet.

Auf diese Weise kann der Konfigurations- und Parametrieraufwand noch weiter verringert werden, da nämlich bereits bei der Neuanschaffung eines Sensors entsprechende Konfigurationsdaten von der Konfigurationseinrichtung an den Applikati onsserver übermittelt werden. Hierdurch kann der Applikationsserver auf den bevorstehenden Einbau eines neuen Sensors im Energieversorgungsnetz vorbereitet werden, so dass beispielsweise der Sensortyp und die Art der von dem Sensor bereitgestellten Messwerte bzw. davon abgeleiteten Werte bereits im Applikationsserver eingetragen werden. Wenn sich der Sensor nun bei seiner Erstinbetriebnahme beim Applikationsserver anmeldet, können die von ihm gelieferten Informationen ohne weitere Einstellungen direkt vom Applikationsserver verwendet und in System-Zustandswerte umgesetzt werden. Die Konfigurationseinrichtung kann beispielsweise Teil eines Online-Shops oder mit einem Online-Shop verbunden sein und immer bei einer Neuanschaffung eines Sensors dessen Sensor-Kennung (und ggf. weitere die Konfiguration des Sensors betreffende Informationen, z.B. eine Adressierung, einen Sensortyp, für die Ermittlung der System-Statuswerte zu verwendende Schwellenwerte) an den Applikationsserver übermitteln. Der Applikationsserver baut mit diesen Informationen einen sensorbezogenen Datensatz auf, der nach Erstinbetriebnahme und Anmeldung des Sensors beim Applikationsserver für den Betreiber des Energieversorgungsnetzes aktiv geschaltet wird.

Bei den Sensoren kann es sich beispielsweise um Fehlerindikatoren handeln, die an elektrischen Freileitungen eines elektrischen Energieversorgungsnetzes Strom und/oder Spannung messen und daraus entsprechende Messwerte erzeugen. Es kann sich aber auch um andere Sensoren handeln, die einen Betriebszustand des Energieversorgungsnetzes beschreibende Messwerte erfassen. Beispielsweise können die Sensoren Bestandteil einer Ortsnetzstation oder einer sogenannten Ring Main Unit sein. Die Sensoren können z.B. auch eine Temperaturmessung an Leitungen oder Transformatoren durchführen. Darüber hinaus können die Sensoren auch Statusmeldungen von Schaltern (offen, geschlossen, Fehler) oder Zustände von Sicherungen (intakt, gezündet) erfassen.

Im Falle anderer Energieverteilnetze können die Sensoren beispielsweise auch Durchflüsse oder -strömungen, Drücke, Viskositäten z.B. eines durch eine Leitung fließenden Mediums, oder Statusmeldungen, z.B. von Ventilzuständen, erfassen.

Die von den Sensoren erfassten Messwerte können beispielsweise einen elektrischen Strom und/oder eine elektrische Spannung und/oder eine Temperatur umfassen. Von diesen abgeleitete Werte können beispielsweise elektrische Leistungen oder Impedanzen sein, einen Gradienten der Messwerte angeben (z.B. die Steilheit eines Stromanstiegs) oder Ereignisse, die durch einen Schwellenwertvergleich erkannt werden (z.B. ein Strom übersteigt einen Stromschwellenwert) darstellen. Die Übermittlung der Messwerte oder der davon abgeleiteten Werte kann beispielsweise über vordefinierte Datentelegramme oder Templates (z.B. im XML-Format) erfolgen, die lediglich mit den tatsächlichen Messwerten oder davon abgeleiteten Werten angereichert werden.

Bei den System-Statuswerten kann es sich im einfachsten Fall um die Messwerte bzw. die von diesen abgeleiteten Werte selbst handeln, die mit einer Information über die entsprechende Messstelle, an der der zugehörige Sensor angeordnet ist, angereichert werden. Beispielsweise können die Messwerte bzw. die davon abgeleiteten Werte auf einer Netzwerktopologie oder einer geografischen Karte angezeigt werden und in dieser Form die System-Statuswerte bilden. Der Applikationsserver kann auch durch weitere Verarbeitungsschritte aus den Messwerten oder den davon abgeleiteten Werten die System-Statuswerte bilden, beispielsweise können durch Schwellenwertvergleiche Ereignisse erkannt werden, so dass ein System-Statuswert beispielsweise die Überschreitung eines Schwellenwertes an einer bestimmten Messstelle angibt. Es können auch aus mehreren Messwerten oder davon abgeleiteten Werten Mittelwerte, Extremwerte oder Effektivwerte gebildet und als System-Statuswerte verwendet werden. Generell kann festgehalten werden, dass ein System-Statuswert jeder beliebige Wert mit einem für den Betreiber des Energieversorgungsnetzes hilfreichen Informationsgehalt über den Zustand des Energieversorgungsnetzes sein kann, der einen Bezug zu der entsprechenden Messstelle aufweist.

In einem einfachen Fall können die System-Statuswerte beispielsweise in Form von Webseiten zur Verfügung gestellt werden und vom Betreiber des Energieversorgungsnetzes mittels eines auf der Beobachtungseinrichtung ablaufenden Web-Browsers abgerufen und angezeigt werden. Dabei können die System-Statuswerte vom Applikationsserver beispielsweise als HTML- oder XML-Dokumente bereitgestellt werden. Da diese im Wesentlichen für eine statische Informationsanzeige geeignet sind, können dynamische Anteile auch als Applets (z.B. Java Applets, ActiveX-Steuerelemente) oder in Form von Web-Services bereitgestellt werden, die in die die statischen Anteile beinhaltenden HTML- oder XML-Dokumente eingebunden werden.

Bei der Beobachtungseinrichtung kann es sich um jede Form einer Datenverarbeitungseinrichtung mit Anzeigemöglichkeit handeln; so kann die Beobachtungseinrichtung ein PC oder eine Workstation, z.B. in einer Netzleitstelle, oder ein mobiler Computer, wie z.B. ein Laptop, sein. Außerdem können auch mobile Geräte wie Smartphones oder Tablet-Computer als Beobachtungseinrichtung verwendet werden. Die Beobachtungseinrichtung muss lediglich eine Software aufweisen, die zur Verarbeitung der System-Statuswerte und zur Erzeugung einer entsprechenden Visualisierung geeignet ist. Dies kann beispielsweise ein Browser, eine spezielles Anzeigeprogramm oder eine Applikation für Mobilcomputer (eine sogenannte "APP") sein.

Um etwaige Bedenken hinsichtlich der Übermittlung von netzbezogenen Informationen an einen Dritten auszuräumen, kann ggf. vorgesehen sein, dass mittels der Sensoren lediglich netzdienliche und nicht netzkritische Messwerte erfasst werden. Solche netzdienlichen Messwerte verbessern zwar einen Überblick über den Betriebszustand des Energieversorgungsnetzes, sind jedoch nicht als kritische Informationen hinsichtlich einer zuverlässigen Steuerung des Energieversorgungsnetzes (wie z.B. Messwerte von elektrischen Schutzgeräten) anzusehen. Zur Absicherung der Übermittlung der Informationen zwischen den Sensoren und dem Applikationsserver einerseits und dem Applikationsserver und der Beobachtungseinrichtung andererseits kann die jeweilige Kommunikation bevorzugt verschlüsselt durchgeführt werden.

Um die Sensoren möglichst energiesparend zu betreiben, kann zudem vorgesehen sein, dass sie ihre Messwerte oder die davon abgeleiteten Werte nur in bestimmten vorgegebenen Intervallen oder ereignisgesteuert (z.B. bei Erkennen eines erhöhten Stromflusses) an den Applikationsserver übermitteln. Hierdurch kann nämlich die für die Kommunikationsverbindung mit dem Applikationsserver aufzuwendende elektrische Energie weitgehend minimiert werden. Nach der Übermittlung eines Messwerts oder eines davon abgeleiteten Werts an den Applikationsserver deaktiviert der Sensor seine Kommunikationseinrichtung wieder und muss nur noch die zur Erfassung und ggf. Verarbeitung bzw. Auswertung der Messwerte notwendige Energie bereitstellen. Der Sensor kann beispielsweise aus dem Energieversorgungsnetz selbst mit elektrischer Energie gespeist werden ("Energie-Harvesting"), seine elektrische Energie aus regenerativen Energiequellen (z.B. Solarzellen) beziehen oder eine Batterie, einen Akkumulator oder einen entsprechend bemessenen Kondensator umfassen. Auch eine Kombination aus verschiedenen Energiequellen ist möglich.

Obwohl die Erfindung eingangs insbesondere im Zusammenhang mit Verteilnetzen der niedrigen Mittelspannungsebenen und der Niederspannungsebene erwähnt wird, kann sie entsprechend auch auf andere Energieversorgungsnetze, wie z.B. Hochspannungsübertragungsnetze oder Verteilnetze der höheren Mittelspannungsebenen, angewandt werden, Die Topologie und Art des Energieversorgungsnetzes spielt hinsichtlich der Erfindung keine Rolle, so dass die Erfindung flexibel bei mannigfachen Energieversorgungsnetzen eingesetzt werden kann. Wie eingangs bereits erwähnt, kann die Erfindung neben elektrischen Energieversorgungsnetzen auch in anderen Energieversorgungsnetzen (Gas, Öl, Wärme, Luft etc.) zur Anwendung kommen.

Gemäß einer vorteilhaften Ausführungsform des erfindungsgemäßen Verfahrens ist vorgesehen, dass jeder Sensor eine Fernbereichs-Kommunikationseinrichtung aufweist und die Übermittlung der Messwerte oder der davon abgeleiteten Werte von den Sensoren an den Applikationsserver unter Verwendung einer mittels der Fernbereichs-Kommunikationseinrichtung aufgebauten Fernbereichs-Kommunikationsverbindung erfolgt.

Bei dieser Ausführungsform weist jeder Sensor eine Fernbereichs-Kommunikationseinrichtung, z.B. ein Mobilfunkmodul nach GPRS- oder UMTS-Standard, auf. Mit diesem wird eine Fernbereichs-Kommunikationsverbindung, vorzugsweise eine IPbasierte Datenverbindung, mit dem Applikationsserver aufgebaut. Dabei kann beispielsweise ein Anbieter eines Mobilfunkdienstes (Telekommunikationsanbieter) als Mittler dazwischengeschaltet sein und die Fernbereichs-Kommunikationsverbindung kann zumindest teilweise über ein Kommunikationsnetz dieses Anbieters und/oder zumindest teilweise über das Internet hergestellt werden. Der Vorteil dieser Ausführungsform besteht darin, dass hinsichtlich der Kommunikationsfunktionen der einzelnen Sensoren für den Betreiber des Energieversorgungsnetzes kein oder nur sehr geringer Konfigurations- bzw. Parametrieraufwand anfällt. Außer der Konfigurierung der Fernbereichs-Kommunikationseinrichtung der jeweiligen Sensoren mit den für den Aufbau der Fernbereichs-Kommunikationsverbindung notwendigen Informationen (z.B. dem Einbau eines SIM-Karte eine Telekommunikationsanbieters) muss für den einzelnen Sensor nämlich kein weiterer Aufwand betrieben werden.

Es ist zudem auch möglich, den jeweiligen Sensor bereits herstellerseitig mit den entsprechenden Informationen vorzukonfigurieren. Auch kann beispielsweise der Betreiber des Applikationsservers, der auch mit dem Hersteller der Sensoren identisch sein kann, dem Betreiber des Energieversorgungsnetzes seinen Service inklusive der für den Betrieb der Fernbereichs-Kommunikationsverbindung Aufwendungen (also z.B. ein Paket, beinhaltend den Sensor, den Dienst des Applikationsservers und einen Mobilfunkvertrag für den Sensor) anbieten.

Gemäß einer alternativen Ausführungsform des erfindungsgemäßen Verfahrens kann auch vorgesehen sein, dass jeder Sensor eine Nahbereichs-Kommunikationseinrichtung aufweist, die Sensoren die von ihnen erfassten Messwerte oder die davon abgeleiteten Werte unter Verwendung einer mittels der Nahbereichs-Kommunikationseinrichtung mit einer Übermittlungskomponente aufgebauten Nahbereichs-Kommunikationsverbindung an die Übermittlungskomponente übertragen, und die Übermittlungskomponente die empfangenen Messwerte oder die davon abgeleiteten Werte an den Applikationsserver übermittelt.

In diesem Fall baut nicht jeder Sensor selbst mit dem Applikationsserver eine Fernbereichs-Kommunikationsverbindung auf. Stattdessen kann zwischen einer Gruppe von Sensoren und einer Übermittlungskomponente, bei der es sich beispielsweise um eine Remote Terminal Unit (RTU) oder aber auch einen ausgewählten Sensor handeln kann, eine Nahbereichs-Kommunikationsverbindung aufgebaut werden. Die Sensoren übermitteln ihre Messwerte oder die davon abgeleiteten Werte zunächst über die Nahbereichs-Kommunikationsverbindung, bei der es sich beispielsweise um eine ZigBee-, eine Bluetooth-, eine Wireless M-Bus- oder eine WiFi-Kommunikationsverbindung handeln kann, an die Übermittlungskomponente, die diese dann als Vermittler über eine Fernbereichs-Kommunikationsverbindung (z.B. eine Mobilfunkverbindung wie zur vorigen Ausführungsform näher erläutert) an den Applikationsserver übermittelt.

Eine weitere vorteilhafte Ausführungsform des erfindungsgemäßen Verfahrens sieht zudem vor, dass die Sensoren den an den Applikationsserver zu übermittelnden Messwerten oder den davon abgeleiteten Werten eine eindeutige Sensor-Kennung und/oder eine die geografische Lage der Messstelle des jeweiligen Sensors kennzeichnende Ortsinformation beifügen.

Auf diese Weise kann die von einem Sensor an den Applikationsserver zu übermittelnde Informationsmenge sehr gering gehalten werden. Es reicht nämlich aus, wenn der Applikationsserver über die eindeutige Sensor-Kennung (z.B. eine IP-Adresse, einen GUID (Global Unique Identifier), eine MAC-Adresse, eine Geräte- oder Seriennummer etc.) und/oder die Ortsinformation (z.B. Gauß-Krüger-Koordinaten oder geografische Längen- und Breitengrad-Winkel) den jeweiligen Sensor eindeutig identifizieren kann und die an der Messstelle des jeweiligen Sensors erfassten Messwerte oder die davon abgeleiteten Werte erhält. Aus diesen Informationen kann der Applikationsserver vergleichsweise einfach die jeweiligen System-Statuswerte erzeugen.

Gemäß einer weiteren vorteilhaften Ausführungsform des erfindungsgemäßen Verfahrens kann zudem vorgesehen sein, dass die Sensoren an den Applikationsserver die erfassten Messwerte übermitteln, der Applikationsserver die empfangenen Messwerte hinsichtlich ihrer Lage in einem den zulässigen Betriebsbereich der jeweiligen Primärkomponente, der der jeweilige Sensor zugeordnet ist, überprüft, und der Applikationsserver die System-Statuswerte in Abhängigkeit vom Ergebnis der Überprüfung bildet.

Bei dieser Ausführungsform findet in vorteilhafter Weise der wesentliche Teil der Verarbeitung und/oder Auswertung der Messwerte erst durch den Applikationsserver statt, so dass die Sensoren selbst davon entlastet werden und zudem kein für diese Verarbeitungs- und/oder Auswertungsschritte notwendiger Aufwand hinsichtlich der Sensoren betrieben werden muss (z.B. die Einstellung von Schwellenwerten als Parameter der Sensoren). Die Sensoren übermitteln hierbei lediglich die Rohdaten, nämlich die jeweiligen erfassten Messwerte, an den Applikationsserver, der danach die Verarbeitung (z.B. Bildung abgeleiteter Werte, Filterung, Fensterbildung, Mittelwertbildung etc.) und/oder Auswertung (z.B. Ermittlung von Ereignissen durch Schwellenwertvergleich) vornimmt.

Alternativ dazu kann jedoch auch vorgesehen sein, dass die Sensoren die erfassten Messwerte selbst hinsichtlich ihrer Lage in einem den zulässigen Betriebsbereich der jeweiligen Primärkomponente, der der jeweilige Sensor zugeordnet ist, überprüfen, die Sensoren die aus den erfassten Messwerten abgeleiteten Werte in Abhängigkeit vom Ergebnis der Überprüfung bilden, die Sensoren die abgeleiteten Werte an den Applikationsserver übermitteln, und der Applikationsserver die System-Statuswerte unter Verwendung der empfangenen abgeleiteten Werte bildet.

In diesem Fall wird die Auswertung zu großen Teilen bereits durch die Sensoren selbst durchgeführt. Die hierfür benötigten Parameter, wie z.B. Schwellenwerte, die einen zulässigen Betriebsbereich angeben, müssen einer Recheneinrichtung der Sensoren vorgegeben werden. Da die Sensoren in diesem Fall die Ereignisse bereits selbst erkennen und an den Applikationsserver übermitteln, müssen dort weniger Einstellungen vorgenommen werden und die von den Sensoren übermittelten Ereignisse können meist direkt in die System-Statuswerte umgesetzt und an die Beobachtungseinrichtung des Betreibers des Energieversorgungsnetzes übermittelt werden.

Eine weitere vorteilhafte Ausführungsform des erfindungsgemäßen Verfahrens sieht vor, dass der Applikationsserver eine den Aufbau des Energieversorgungsnetzes beschreibende Topologieinformation bereitstellt, und der Applikationsserver unter Verwendung der empfangenen Messwerte oder der davon abgeleiteten Werte und der Topologieinformation die System-Zustandswerte bildet, indem er eine grafische Repräsentation des Betriebszustands des Energieversorgungsnetzes an der Messstelle des jeweiligen Sensors einer der Messstelle entsprechenden Position in der Topologieinformation zuordnet.

Bei der Topologieinformation kann es sich beispielsweise um eine geografische Karte handeln, die die Struktur des Energieversorgungsnetzes (Knotenpunkte, Verlauf von Leitungen) beinhaltet. Alternativ oder zusätzlich kann die Topologieinformation auch eine schematische Darstellung des Aufbaus des Energieversorgungsnetzes sein, die sich eher an technischen Gegebenheiten, wie z.B. Spannungsebenen etc., orientiert (z.B. ein Netzplan). In beiden Fällen umfassen die System-Zustandswerte eine grafische Repräsentation des Zustands des Energieversorgungsnetzes an einer der jeweiligen Messstelle entsprechenden Position in der Topologieinformation. Beispielsweise kann basierend auf solchen System-Zustandswerten mittels der Beobachtungseinrichtung ein Überschreiten eines Stromschwellenwertes als grafisches Symbol in einem Netzplan an derjenigen Position angezeigt werden, die der Messstelle des jeweiligen Sensors entspricht.

Gemäß einer weiteren vorteilhaften Ausführungsform des erfindungsgemäßen Verfahrens kann zudem vorgesehen sein, dass der Applikationsserver Verläufe vergangener Messwerte oder davon abgeleiteter Werte und/oder Verläufe vergangener System-Zustandswerte in einer Datenbank abspeichert und für einen Abruf durch die Beobachtungseinrichtung des Betreibers des Energieversorgungsnetzes bereitstellt.

Auf diese Weise kann quasi eine Datenbank mit historischen Verläufen der Messwerte bzw. der davon abgeleiteten Werte durch den Applikationsserver angelegt und gepflegt werden, die der Betreiber des Energieversorgungsnetzes bei Bedarf abfragen kann. Auch hierdurch kann auf Seiten des Betreibers des Energieversorgungsnetzes Aufwand, nämlich das Vorhalten von Speicherplatz und das Anlegen und Pflegen der Datenbank mit den historischen Verläufen, vermieden werden.

Eine weitere vorteilhafte Ausführungsform des erfindungsgemäßen Verfahrens sieht zudem vor, dass der Applikationsserver bei der Bildung der System-Statuswerte eine Überprüfung durchführt, ob die System-Statuswerte auf einen ungewollten Betriebszustand des Energieversorgungsnetzes hinweisen, und der Applikationsserver bei einem Hinweis auf einen ungewollten Betriebszustand eine separate Alarm-Nachricht an eine Datenverarbeitungseinrichtung des Betreibers des Energieversorgungsnetzes versendet.

Hierdurch kann der Betreiber des Energieversorgungsnetzes direkt und somit zeitnah auf den ungewollten Betriebszustand (z.B. ein Überschreiten eines Stromschwellenwertes aufgrund eines Kurzschlusses) hingewiesen werden. Die separate Alarm-Nachricht kann hierbei durch den Applikationsserver an vorkonfigurierte Empfänger, insbesondere Mitarbeiter des Betreibers des Energieversorgungsnetzes oder eines Wartungsdienstes, versendet werden. Die Empfängerdaten der Empfänger können hierzu auf dem Applikationsserver eingestellt werden, dabei kann auch eine ereignisspezifische Empfängerauswahl erfolgen (z.B. bei einem erkannten Ausfall einer Leitung wird ein Wartungstechniker benachrichtigt, bei einem anstehenden Kurzschluss wird ein Netzleittechniker benachrichtigt). Die Alarm-Nachricht kann beispielsweise als SMS an eine oder mehrere vorgegebene Telefonnummern und/oder als Email an eine oder mehrere vorgegebene Emailadressen versendet werden.

Gemäß einer weiteren vorteilhaften Ausführungsform des erfindungsgemäßen Verfahrens ist vorgesehen, dass die Sensoren auch den eigenen Betriebszustand angebende Zustandswerte ermitteln, die Zustandswerte an den Applikationsserver übermittelt werden, mittels des Applikationsservers eine Auswertung und/oder eine Bearbeitung der Zustandswerte unter Bildung von Sensor-Statuswerten vorgenommen wird, die den Betriebszustand des jeweiligen Sensors angeben, die Sensor-Statuswerte von dem Applikationsserver an die Beobachtungseinrichtung des Betreibers des Energieversorgungsnetzes übermittelt werden, und mittels der Beobachtungseinrichtung anhand der von dem Applikationsserver empfangenen Sensor-Statuswerte eine den Betriebszustand des jeweiligen Sensors angebende Visualisierung erzeugt und angezeigt wird.

Auf diese Weise kann neben den netzbezogenen System-Statuswerten auch der Betriebszustand der jeweiligen Sensoren überwacht und angezeigt werden. Die Zustandswerte beziehen sich hierbei auf den Sensor selbst betreffende Informationen und können beispielsweise einen Fehlerzustand des Sensors, einen Ladezustand einer Batterie/eines Akkus des Sensors, die Anzahl der bisher erkannten Ereignisse, die Anzahl der bisher durchgeführten Kommunikations-Verbindungen mit dem Applikationsserver etc. umfassen. Die Zustandswerte können beispielsweise in Form eines vorgegebenen und bedarfsweise befüllten Templates (z.B. eines XML-Templates) an den Applikationsserver übermittelt werden. Die von dem Applikationsserver aus den Zustandswerten ermittelten Sensor-Statuswerte können beispielsweise einen kritischen Batterieladestand bezogen auf die Position der Messstelle des jeweiligen Sensors umfassen. Daraus kann mittels der Beobachtungseinrichtung eine entsprechende Visualisierung (z.B. ein Batteriesymbol an einer entsprechenden Position in einem Netzplan) erzeugt und dargestellt werden.

Hinsichtlich der sensorbezogenen Zustands-Werte und der daraus ermittelten Sensor-Statuswerte gilt generell dasselbe, das bereits zu den Messwerten bzw. den davon abgeleiteten Werten und den System-Statuswerten erläutert worden ist, so dass jedes die System-Statuswerte betreffende Ausführungsbeispiel in entsprechender Weise auch auf die Sensor-Statuswerte bezogen werden kann.

Gemäß einer weiteren vorteilhaften Ausführungsform des erfindungsgemäßen Verfahrens ist schließlich vorgesehen, dass der Applikationsserver mehrere voneinander abgetrennte Datenbereiche aufweist, die gegen einen Zugriff aufeinander abgesichert sind, Sensoren unterschiedlicher Betreiber von Energieversorgungsnetzen ihre Messwerte oder davon abgeleiteten Messwerte an den Applikationsserver übermitteln, wobei der Applikationsserver die empfangenen Messwerte oder davon abgeleiteten Werte jeweils ausschließlich einem dem jeweiligen Betreiber eines Energieversorgungsnetzes zugeordneten Datenbereich zuordnet, und der Applikationsserver für jeden Datenbereich getrennt die System-Statuswerte bildet und die System-Statuswerte ausschließlich an eine Beobachtungseinrichtung desjenigen Betreibers eines Energieversorgungsnetzes übermittelt, dem der entsprechende Datenbereich zugeordnet ist.

Der besondere Vorteil dieser Ausführungsform besteht darin, dass der Betreiber des Applikationsservers seinen Dienst mehreren verschiedenen Betreibern von Energieversorgungsnetzen anbieten kann. Dabei muss jedoch sichergestellt werden, dass jeder Betreiber eines Energieversorgungsnetzes ausschließlich auf "seine" Informationen zugreifen kann, indem beispielsweise die System-Statuswerte, die auf Sensoren eines bestimmten Energieversorgungsnetzes zurückgehen, ausschließlich an eine Beobachtungseinrichtung des zugehörigen Betreibers des fraglichen Energieversorgungsnetzes übermittelt werden.

Die oben genannte Aufgabe wird auch durch ein System zur Beobachtung des Betriebszustands eines Energieversorgungsnetzes gelöst, mit Sensoren, die an Primärkomponenten des Energieversorgungsnetzes zugeordneten Messstellen vorgesehen und dazu eingerichtet sind, einen Betriebszustand des elektrischen Energieversorgungsnetzes angebende Messwerte zu erfassen, und mit einer Beobachtungseinrichtung des Betreibers des Energieversorgungsnetzes, die dazu eingerichtet ist, basierend auf den Messwerten oder davon abgeleiteten Werten eine den Betriebszustand des Energieversorgungsnetzes an der Messstelle des jeweiligen Sensors angebende Visualisierung zu erzeugen, wobei ein Applikationsserver vorgesehen ist, dessen Betreiber vom Betreiber des Energieversorgungsnetzes verschieden ist; die Sensoren dazu eingerichtet sind, die Messwerte oder davon abgeleiteten Werte zunächst an den Applikationsserver zu übermitteln; der Applikationsserver dazu eingerichtet ist, eine Auswertung und/oder eine Bearbeitung der Messwerte oder der daraus abgeleiteten Werte unter Bildung von System-Statuswerten, die den Betriebszustand des Energieversorgungsnetzes an der Messstelle des jeweiligen Sensors angeben, vorzunehmen; der Applikationsserver auch dazu eingerichtet ist, die System-Statuswerte an die Beobachtungseinrichtung (14) des Betreibers des Energieversorgungsnetzes zu übermitteln; und die Beobachtungseinrichtung dazu eingerichtet ist, anhand der von dem Applikationsserver empfangenen System-Statuswerte die den Betriebszustand des Energieversorgungsnetzes an der Messstelle des jeweiligen Sensors angebende Visualisierung zu erzeugen und anzuzeigen.

Erfindungsgemäß ist vorgesehen, dass der Applikationsserver mit einer Konfigurationseinrichtung zusammenwirkt, die bei einer Neuanschaffung eines Sensors durch den Betreiber des Energieversorgungsnetzes eine eindeutige Sensor-Kennung gemeinsam mit einer den Betreiber des Energieversorgungsnetzes angebenden Betreiber-Kennung an den Applikationsserver übermittelt; und der Sensor sich bei seiner Inbetriebnahme unter Verwendung seiner eindeutigen Sensor-Kennung beim Applikationsserver anmeldet.

Gemäß einer vorteilhaften Ausführungsform des erfindungsgemäßen Systems ist vorgesehen, dass zumindest einige der Sensoren Fehlerindikatoren sind, die an Leitungen des Energieversorgungsnetzes angebracht und dazu eingerichtet sind, Messwerte zu erfassen, die einen Stromfluss durch die Leitung angeben.

Fehlerindikatoren stellen, wie eingangs bereits erläutert, einfache und kostengünstige Sensoren zur Beobachtung des Betriebszustands eines Energieversorgungsnetzes dar. Mit den Strommessungen eines Fehlerindikators lassen sich insbesondere aufgetretene Fehler (Kurzschlüsse, Erdschlüsse) erkennen und lokalisieren, da ausschließlich den Fehlerstrom erkennende Fehlerindikatoren einen entsprechend hohen Strom messen.

Gemäß einer weiteren vorteilhaften Ausführungsform des erfindungsgemäßen Systems ist zudem vorgesehen, dass der Applikationsserver mehrere voneinander abgetrennte Datenbereiche aufweist, die gegen einen Zugriff aufeinander abgesichert sind, der Applikationsserver dazu eingerichtet ist, Messwerte oder davon abgeleiteten Messwert von Sensoren unterschiedlicher Betreiber von Energieversorgungsnetzen zu empfangen und die empfangenen Messwerte oder davon abgeleiteten Werte jeweils ausschließlich einem dem jeweiligen Betreiber eines Energieversorgungsnetzes zugeordneten Datenbereich zuzuordnen, und der Applikationsserver dazu eingerichtet ist, für jeden Datenbereich getrennt die System-Statuswerte zu bilden und die System-Statuswerte ausschließlich an eine Beobachtungseinrichtung desjenigen Betreibers eines Energieversorgungsnetzes zu übermitteln, dem der entsprechende Datenbereich zugeordnet ist.

Hinsichtlich des erfindungsgemäßen Systems gelten alle zu dem erfindungsgemäßen Verfahren voranstehend und nachfolgend gemachten Ausführungen und umgekehrt in entsprechender Weise, insbesondere ist das erfindungsgemäße System zur Durchführung des erfindungsgemäßen Verfahrens in jeder beliebigen Ausführungsform oder einer Kombination beliebiger Ausführungsformen eingerichtet. Auch hinsichtlich der Vorteile des erfindungsgemäßen Systems wird auf die zu dem erfindungsgemäßen Verfahren beschriebenen Vorteile verwiesen.

Die Erfindung wird nachfolgend anhand von Ausführungsbeispielen näher erläutert. Die spezifische Ausgestaltung der Ausführungsbeispiele ist für die allgemeine Ausgestaltung des erfindungsgemäßen Verfahrens und des erfindungsgemäßen Systems in keiner Weise einschränkend zu verstehen; vielmehr können einzelne Ausgestaltungsmerkmale des Ausführungsbeispiels in beliebiger Weise frei untereinander und mit den voranstehend beschriebenen Merkmalen kombiniert werden.

Es zeigen
- Figur 1: eine schematische Übersicht eines Ausführungsbeispiels eines Systems zum Beobachten eines elektrischen Energieversorgungsnetzes;
- Figur 2: ein weiteres Ausführungsbeispiel einer kommunikationstechnischen Anbindung von Sensoren in einem Energieversorgungsnetz;
- Figur 3: ein weiteres Ausführungsbeispiel einer kommunikationstechnischen Anbindung von Sensoren in einem Energieversorgungsnetz; und
- Figur 4: eine schematische Darstellung einer Beobachtungseinrichtung mit einer beispielhaften Visualisierung von System-Statuswerten und Sensor-Statuswerten.

Die Erfindung wird nachfolgend anhand eines auf ein elektrisches Energieversorgungsnetz bezogenen Beispiels näher erläutert. Wie bereits erwähnt, kann die Erfindung auch bei anderen Energieversorgungsnetzen entsprechend zum Einsatz kommen.

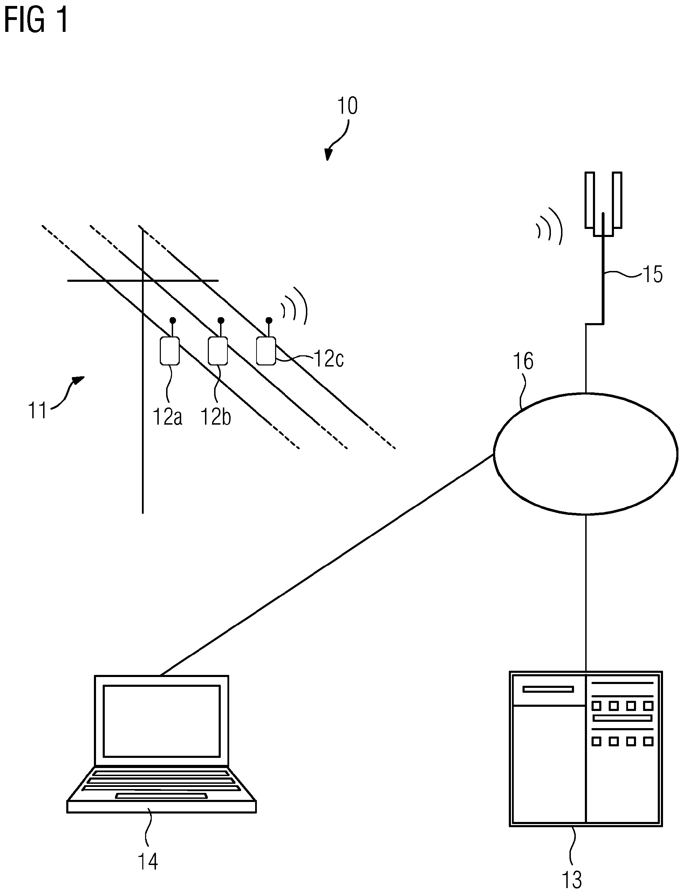

Figur 1 zeigt in schematischer Darstellung ein System 10 zur Beobachtung eines lediglich schematisch angedeuteten Energieversorgungsnetzes 11. Das System umfasst Sensoren 12a-c, die an Messstellen des Energieversorgungsnetzes 11 angeordneten sind und dort Messwerte erfassen, aus denen auf den Betriebszustand des Energieversorgungsnetzes 11 geschlossen werden kann. Im Beispiel der Figur 1 handelt es sich bei den Sensoren 12a-c um sogenannte Fehlerindikatoren, die an Freileitungen des elektrischen Energieversorgungsnetzes angebracht sind und mittels geeigneter Sensoren einen Stromfluss in der jeweiligen Leitung erfassen und daraus entsprechende Messwerte erzeugen. Das System 10 umfasst zudem einen Applikationsserver 13 und eine Beobachtungseinrichtung 14 des Betreibers des elektrischen Energieversorgungsnetzes 11. Der Applikationsserver 13 befindet sich außerhalb des Einflussbereichs des Betreibers des Energieversorgungsnetzes 11 und kann beispielsweise sich stattdessen beispielsweise im Einflussbereich eines Herstellers der Sensoren 12a-c oder eines Diensteanbieters befinden.

Das System 10 zum Beobachten des Energieversorgungsnetzes 11 wird wie folgt betrieben:
Mittels der Sensoren 12a-c werden den Betriebszustand des Energieversorgungsnetzes 11 an der jeweiligen Messstelle beschreibende Messwerte, z.B. Strommesswerte, Spannungsmesswerte oder Temperaturmesswerte, erfasst. Im vorliegenden Beispiel soll davon ausgegangen werden, dass mit den Sensoren 12a-c in Form von Fehlerindikatoren an der jeweiligen Messstelle fließende Ströme angebende Messwerte erfasst werden. Die Messwerte oder von diesen abgeleitete Werte werden daraufhin an den Applikationsserver 13 übertragen. Die Übertragung der Messwerte oder der davon abgeleiteten Werte kann dabei beispielsweise zumindest in Form einer drahtlosen Fernbereichs-Kommunikationsverbindung, z.B. einer Mobilfunkverbindung, und/oder zumindest teilweise über das Internet hergestellt werden. In dem Beispiel gemäß Figur 1 wird zwischen dem Sensor 12c und einem Sende- / Empfangsknoten 15 eines Mobilfunkanbieters über eine drahtlose Fernbereichs-Kommunikationsverbindung eine mobile Datenverbindung hergestellt, über die die Messwerte oder die davon abgeleiteten Werte als IP-Datenpakete übertragen werden. Von dem Sende- / Empfangsknoten 15 werden die empfangenen Datenpakete über das Internet 16 oder ein anderes Kommunikationsnetzwerk an den Applikationsserver 13 übermittelt.

Der Applikationsserver 13 bildet aus den Messwerten oder den davon abgeleiteten Werten System-Statuswerte und übermittelt diese, z.B. erneut über das Internet 16, an die Beobachtungseinrichtung 14 des Betreibers des Energieversorgungsnetzes 11. Die System-Statuswerte sind dabei dazu geeignet, einen Betriebszustand des Energieversorgungsnetzes an der Messstelle des jeweiligen Sensors 12a-c zu beschreiben, z.B. einen erhöhten Stromfluss.

Dazu sind auf dem Applikationsserver üblicherweise einen zulässigen Betriebszustand des Energieversorgungsnetzes 11 an der jeweiligen Messstelle abgrenzende Schwellenwerte definiert. Beispielsweise ist für eine bestimmte Messstelle ein Stromschwellenwert definiert, der den zulässigen Betriebsbereich von einem unzulässigen Betriebsbereich trennt. Der Applikationsserver vergleicht beispielsweise den von dem jeweiligen Sensor 12a-c erhaltenen Messwert mit dem jeweils zugehörigen Schwellenwert. Bei Überschreitung des Stromschwellenwertes wird ein an der Messstelle aufgetretener Fehler erkannt und ein entsprechender System-Statuswert erzeugt, der das Ereignis (hier den Fehler) und die Messstelle des betreffenden Sensors angibt.

Der System-Statuswert wird daraufhin (automatisch oder auf Abruf) an die Beobachtungseinrichtung 14 übermittelt. Mittels der Beobachtungseinrichtung 14 wird aus dem System-Statuswert eine Visualisierung des Betriebszustands des Energieversorgungsnetzes 11 an der jeweiligen Messstelle erzeugt. Im erläuterten Beispiel wird folglich eine einen Fehler mit überhöhtem Stromfluss angebende Visualisierung für die betroffene Messstelle erzeugt.

In derselben Weise können von den Sensoren 12a-c an den Applikationsserver 13 auch einen jeweiligen Betriebszustand der Sensoren 12a-c selbst beschreibende Zustandswerte übermittelt werden. Diese Zustandswerte werden vom Applikationsserver 13 zur Bildung von Sensor-Statuswerten herangezogen und ebenfalls der Beobachtungseinrichtung übermittelt.

Der Applikationsserver 13 kann zudem eine Überwachung der Messwerte bzw. der davon abgeleiteten Werte daraufhin durchführen, ob sie einen unzulässigen Betriebszustand des Energieversorgungsnetzes 11 angeben und bei Vorliegen eines solchen Zustands eine Alarm-Meldung, z.B. eine Email oder eine SMS, an eine Datenverarbeitungseinrichtung des Betreibers des Energieversorgungsnetzes 11 senden. Dabei kann es sich z.B. um Smartphones oder mobile Computer von Mitarbeitern des Betreibers des Energieversorgungsnetzes 11 handeln, die über den unzulässigen Betriebszustand informiert werden sollen.

Der Applikationsserver 13 kann eine Datenbank umfassen, in der Messwerte oder daraus abgeleitete Werte, entsprechende System-Statuswerte, Zustandswerte oder Sensor-Statuswerte vergangener Zeiträume oder eine beliebige Auswahl oder Kombination davon zum Abruf durch den Betreiber des Energieversorgungsnetzes bereitgehalten werden.

Der Applikationsserver 13 kann für die Beobachtung verschiedener Energieversorgungsnetze eingerichtet sein. Dazu weist er mehrere Datenbereiche auf, die voneinander getrennt sind, d.h. Zugriffe zwischen den einzelnen Datenbereichen sind nicht gestattet. Jedem Betreiber eines Energieversorgungsnetzes wird nun ein separater Datenbereich auf dem Applikationsserver 13 zugeordnet und es wird dafür gesorgt, dass Messwerte oder davon abgeleitete Werte von Sensoren eines bestimmten Energieversorgungsnetzes ausschließlich dem entsprechenden Betreiber zugänglich gemacht werden.

Außerdem kann der Applikationsserver 13 mit einer (in Figur 1 nicht gezeigten) Konfigurationseinrichtung zusammenwirken, die mit einer Einkaufsfunktion (z.B. einem Online-Shop) verbunden ist und bei einer Neuanschaffung eines Sensors dessen Sensor-Kennung und den Käufer (d.h. den Betreiber des Energieversorgungsnetzes, für den der Sensor angeschafft wird) an den Applikationsserver 13 überträgt. Sobald der angeschaffte Sensor im Energieversorgungsnetz eingebaut ist und sich erstmalig beim Applikationsserver 13 anmeldet, wird er in das Beobachtungssystem integriert und für den entsprechenden Betreiber des Energieversorgungsnetzes aktiviert.

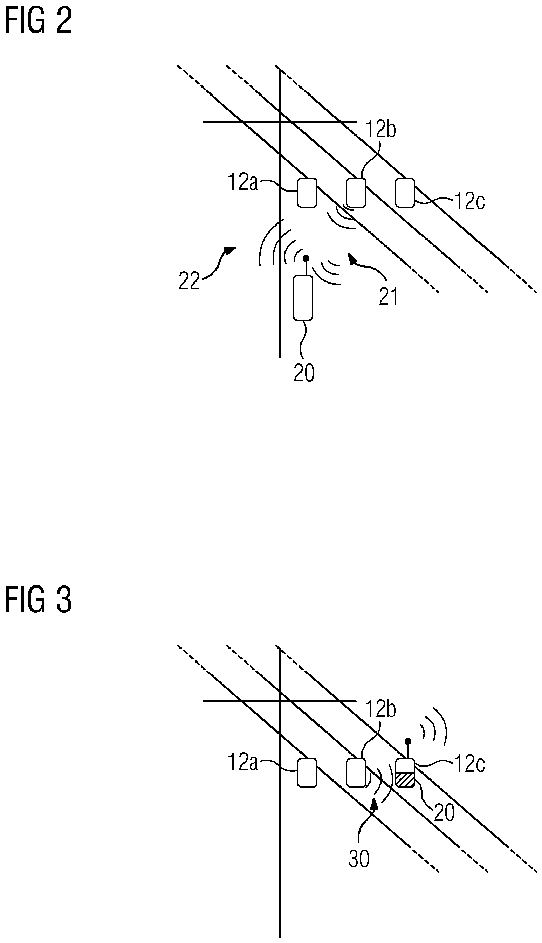

Gemäß Figur 1 weist jeder Sensor 12a-c eine eigene Fernbereichs-Kommunikationseinrichtung (z.B. ein Mobilfunkmodul) auf, über die eine Fernbereichs-Kommunikationsverbindung mit dem Applikationsserver hergestellt werden kann. Figuren 2 und 3 zeigen weitere Ausführungsbeispiele, gemäß denen eine Übermittlung der Messwerte oder der davon abgeleiteten Werte von den Sensoren an den Applikationsserver stattfinden kann.

Gemäß Figur 2 weist jeder Sensor 12a-c eine Nahbereichs-Kommunikationseinrichtung auf (z.B. ein ZigBee-Modul) auf, über die er eine (drahtlose oder drahtgebundene) Nahbereichs-Kommunikationsverbindung mit einer Übermittlungskomponente 20 aufbauen kann. Im Beispiel der Figur 2 hat der Sensor 12b eine drahtlose Nahbereichs-Kommunikationsverbindung 21 mit der Übermittlungskomponente 20 hergestellt. Die Übermittlungskomponente 20 übermittelt anschließend die empfangenen Messwerte oder davon abgeleiteten Werte über eine Fernbereichs-Kommunikationsverbindung 22, z.B. eine Mobilfunkverbindung, direkt oder unter Zwischenschaltung weiterer Kommunikationsmedien (z.B. dem Internet) an den Applikationsserver. Die Übermittlungskomponente 20 gemäß Figur 2 ist hierbei eine separate Komponente, z.B. eine Remote Terminal Unit, die im Sendebereich der Nahbereichs-Kommunikationseinrichtungen einer Gruppe von Sensoren 12a-c angeordnet ist.

Alternativ dazu kann auch, wie im Ausführungsbeispiel der Figur 3 angedeutet, die Übermittlungskomponente 20 Bestandteil eines der Sensoren 12a-c selbst sein. Im in Figur 3 dargestellten Ausführungsbeispiel ist die Übermittlungskomponente 20 in den Sensor 12c integriert, der somit sowohl eine Nahbereichs-Kommunikationseinrichtung als auch eine Fernbereichs-Kommunikationseinrichtung umfasst. Gemäß Figur 3 hat der Sensor 12b mit der in den Sensor 12c integrierten Übermittlungskomponente 20 eine Nahbereichs-Kommunikationsverbindung 30 aufgebaut. Der Sensor 12c übermittelt die empfangenen Messwerte oder davon abgeleiteten Werte über seine Fernbereichs-Kommunikationseinrichtung an den Applikationsserver.

Üblicherweise ist sowohl bei der Ausführungsform der Figur 2 als auch bei der Ausführungsform der Figur 3 eine Gruppe von räumlich nah beieinander angeordneten Sensoren derselben Übermittlungskomponente 20 zugeordnet. Das Energieversorgungsnetz kann mehrere Gruppen von Sensoren mit jeweils zugeordneten Übermittlungskomponenten 20 umfassen.

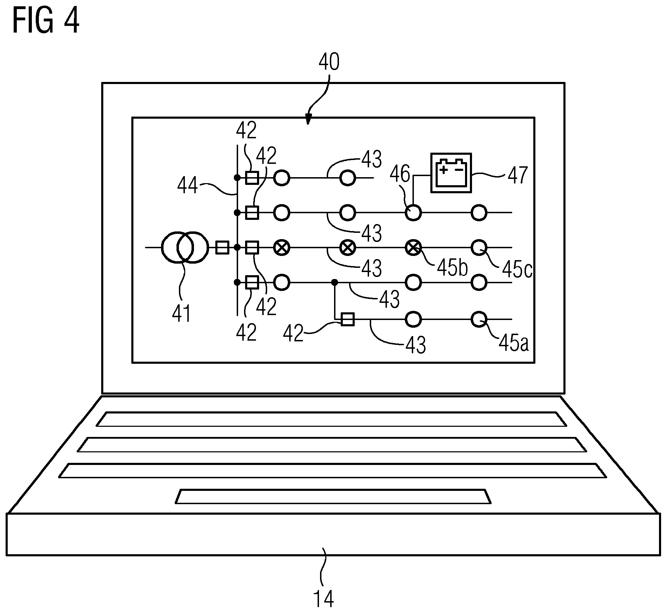

Figur 4 zeigt schließlich ein Beispiel einer Beobachtungseinrichtung 14 in Form eines Laptop-Computers. Die Beobachtungseinrichtung 14 empfängt die vom Applikationsserver bereitgestellten System-Statuswerte und ggf. die Sensor-Statuswerte und wandelt sie in eine entsprechende Visualisierung um, die dem Betreiber des Energieversorgungsnetzes dessen Betriebszustand an den einzelnen Messstellen anzeigt.

Im Beispiel der Figur 4 enthalten die vom Applikationsserver bereitgestellten System-Statuswerte einerseits eine die Topologie des Energieversorgungsnetzes angebende Topologieinformation in Form eines Netzplans. Andererseits umfassen die System-Statuswerte die aus den Messwerten oder den davon abgeleiteten Werten ermittelte Information über den Betriebszustand selbst und eine Angabe der jeweils zugehörigen Messstelle. Diese System-Statuswerte können beispielsweise als HTML-Datei oder als XML-Datei, ggf. auch mit dynamischen Komponenten in Form von Java-Applets, ActiveX-Steuerelemente oder Webservices, an die Beobachtungseinrichtung 14 übermittelt werden. Dies hat den Vorteil, dass die Beobachtungseinrichtung lediglich einen geeigneten Browser vorhalten muss, um die System-Statuswerte in eine entsprechende Visualisierung umzuwandeln. Die System-Statuswerte können aber auch in beliebigen anderen Formaten übermittelt werden, und es kann eine entsprechend eingerichtete andere Visualisierungssoftware auf der Beobachtungseinrichtung zur Anzeige der System-Statuswerte vorgesehen sein.

Die Beobachtungseinrichtung 14 stellt auf einem Anzeigebereich beispielhaft den übermittelten Netzplan 40 dar, der den Aufbau des Energieversorgungsnetzes mit seinen wesentlichen Komponenten (z.B. Transformator 41, Schalter 42, Leitungen 43 und Sammelschienen 44 darstellt. Darüber hinaus sind im Netzplan 40 die einzelnen Messstellen der Sensoren als Kreise (z.B. Kreise 45a-c) eingetragen. Nichtausgefüllte Kreise, wie Kreise 45a und 45c, stellen solche Messstellen dar, an denen der Betriebszustand des Energieversorgungsnetzes im zulässigen Bereich liegt. Mit einem Kreuz markierte Kreise, wie Kreis 45b, stellen hingegen Messstellen dar, an denen ein unzulässiger Betriebszustand, z.B. eine Schwellenwertverletzung, erkannt worden ist. Unter Nutzung der Visualisierung kann der Betreiber leicht feststellen, ob überhaupt ein unzulässiger Betriebszustand vorliegt. Außerdem kann er - wenn ein unzulässiger Betriebszustand vorliegt - diesen räumlich eingrenzen, um ein Wartungsteam an die voraussichtliche Fehlerstelle zu schicken. Im Fall der Figur 4 muss der Fehler auf Leitungsabschnitten zwischen den Kreisen 45b und 45c aufgetreten sein.

Außerdem können vom Applikationsserver bereitgestellte Sensor-Statuswerte von der Beobachtungseinrichtung 14 angezeigt werden. Im Beispiel der Figur 4 hat der Sensor an der Messstelle 46 einen Zustandswert an den Applikationsserver übermittelt, der einen Batteriestand meldet. Der Applikationsserver erzeugt aus dem Zustandswert, beispielsweise durch Vergleich mit einem Soll-Batteriestand, einen Sensor-Statuswert. Beispielsweise kann dieser Sensor-Statuswert einen geringen Batteriestand angeben. Außerdem kann der Applikationsserver dem Sensor-Zustandswert ein entsprechendes Batteriesymbol zuordnen. Die Beobachtungseinrichtung 14 erzeugt aus dem empfangenen Sensor-Zustandswert für die Messstelle 46, z.B. unter Nutzung des vom Applikationsserver erhaltenen Batteriesymbols, eine entsprechende Visualisierung 47, die den Betreiber des Energieversorgungsnetzes darauf hinweist, dass hinsichtlich des Sensors an der entsprechenden Messstelle ein Batterieaustausch notwendig ist.

## Patentansprüche

1. Verfahren zum Beobachten des Betriebszustands eines Energieversorgungsnetzes (11), bei dem
- mittels Sensoren (12a-c), die an Primärkomponenten des Energieversorgungsnetzes (11) zugeordneten Messstellen vorgesehen sind, einen Betriebszustand des Energieversorgungsnetzes (11) angebende Messwerte erfasst werden; und
- basierend auf den Messwerten oder davon abgeleiteten Werten mittels einer Beobachtungseinrichtung (14) des Betreibers des Energieversorgungsnetzes (11) eine den Betriebszustand des Energieversorgungsnetzes (11) an der Messstelle des jeweiligen Sensors (12a-c) angebende Visualisierung erzeugt wird, wobei
- die Messwerte oder davon abgeleiteten Werte von den Sensoren (12a-c) zunächst an einen Applikationsserver (13) übermittelt werden, dessen Betreiber vom Betreiber des Energieversorgungsnetzes (11) verschieden ist;
- mittels des Applikationsservers (13) eine Auswertung und/oder eine Bearbeitung der Messwerte oder der daraus abgeleiteten Werte unter Bildung von System-Statuswerten vorgenommen wird, die den Betriebszustand des Energieversorgungsnetzes (11) an der Messstelle des jeweiligen Sensors (12a-c) angeben;
- die System-Statuswerte von dem Applikationsserver (13) an die Beobachtungseinrichtung (14) des Betreibers des Energieversorgungsnetzes (11) übermittelt werden; und
- mittels der Beobachtungseinrichtung (14) anhand der von dem Applikationsserver (13) empfangenen System-Statuswerte die den Betriebszustand des Energieversorgungsnetzes (11) an der Messstelle des jeweiligen Sensors (12a-c) angebende Visualisierung erzeugt und angezeigt wird;
**dadurch gekennzeichnet, dass**
- der Applikationsserver (13) mit einer Konfigurationseinrichtung zusammenwirkt, die bei einer Neuanschaffung eines Sensors (12a-c) durch den Betreiber des Energieversorgungsnetzes (11) eine eindeutige Sensor-Kennung gemeinsam mit einer den Betreiber des Energieversorgungsnetzes (11) angebenden Betreiber-Kennung an den Applikationsserver (13) übermittelt; und
- der Sensor (12a-c) sich bei seiner Inbetriebnahme unter Verwendung seiner eindeutigen Sensor-Kennung beim Applikationsserver (13) anmeldet.

2. Verfahren nach Anspruch 1,
**dadurch gekennzeichnet, dass**
- jeder Sensor (12a-c) eine Fernbereichs-Kommunikationseinrichtung aufweist; und
- die Übermittlung der Messwerte oder der davon abgeleiteten Werte von den Sensoren (12a-c) an den Applikationsserver (13) unter Verwendung einer mittels der Fernbereichs-Kommunikationseinrichtung aufgebauten Fernbereichs-Kommunikationsverbindung erfolgt.

3. Verfahren nach Anspruch 1,
**dadurch gekennzeichnet, dass**
- jeder Sensor (12a-c) eine Nahbereichs-Kommunikationseinrichtung aufweist;
- die Sensoren (12a-c) die von ihnen erfassten Messwerte oder die davon abgeleiteten Werte unter Verwendung einer mittels der Nahbereichs-Kommunikationseinrichtung mit einer Übermittlungskomponente (20) aufgebauten Nahbereichs-Kommunikationsverbindung an die Übermittlungskomponente (20) übertragen;
und
- die Übermittlungskomponente (20) die empfangenen Messwerte oder die davon abgeleiteten Werte an den Applikationsserver (13) übermittelt.

4. Verfahren nach einem der vorangehenden Ansprüche,
**dadurch gekennzeichnet, dass**
- die Sensoren (12a-c) den an den Applikationsserver (13) zu übermittelnden Messwerten oder den davon abgeleiteten Werten eine eindeutige Sensor-Kennung und/oder eine die geografische Lage der Messstelle des jeweiligen Sensors (12a-c) kennzeichnende Ortsinformation beifügen.

5. Verfahren nach einem der vorangehenden Ansprüche,
**dadurch gekennzeichnet, dass**
- die Sensoren (12a-c) an den Applikationsserver (13) die erfassten Messwerte übermitteln;
- der Applikationsserver (13) die empfangenen Messwerte hinsichtlich ihrer Lage in einem den zulässigen Betriebsbereich der jeweiligen Primärkomponente, der der jeweilige Sensor (12a-c) zugeordnet ist, überprüft; und
- der Applikationsserver (13) die System-Statuswerte in Abhängigkeit vom Ergebnis der Überprüfung bildet.

6. Verfahren nach einem der Ansprüche 1-4,
**dadurch gekennzeichnet, dass**
- die Sensoren (12a-c) die erfassten Messwerte selbst hinsichtlich ihrer Lage in einem den zulässigen Betriebsbereich der jeweiligen Primärkomponente, der der jeweilige Sensor (12a-c) zugeordnet ist, überprüfen;
- die Sensoren (12a-c) die aus den erfassten Messwerten abgeleiteten Werte in Abhängigkeit vom Ergebnis der Überprüfung bilden;
- die Sensoren (12a-c) die abgeleiteten Werte an den Applikationsserver (13) übermitteln; und
- der Applikationsserver (13) die System-Statuswerte unter Verwendung der empfangenen abgeleiteten Werte bildet.

7. Verfahren nach einem der vorangehenden Ansprüche,
**dadurch gekennzeichnet, dass**
- der Applikationsserver (13) eine den Aufbau des Energieversorgungsnetzes (11) beschreibende Topologieinformation bereitstellt; und
- der Applikationsserver (13) unter Verwendung der empfangenen Messwerte oder der davon abgeleiteten Werte und der Topologieinformation die System-Zustandswerte bildet, indem er eine grafische Repräsentation des Betriebszustands des Energieversorgungsnetzes (11) an der Messstelle des jeweiligen Sensors einer der Messstelle entsprechenden Position in der Topologieinformation zuordnet.

8. Verfahren nach einem der vorangehenden Ansprüche,
**dadur chgekennzeichnet**, dass
- der Applikationsserver (13) Verläufe vergangener Messwerte oder davon abgeleiteter Werte und/oder Verläufe vergangener System-Zustandswerte in einer Datenbank abspeichert und für einen Abruf durch die Beobachtungseinrichtung (14) des Betreibers des Energieversorgungsnetzes (11) bereitstellt.

9. Verfahren nach einem der vorangehenden Ansprüche,
**dadurch gekennzeichnet, dass**
- der Applikationsserver (13) bei der Bildung der System-Statuswerte eine Überprüfung durchführt, ob die System-Statuswerte auf einen ungewollten Betriebszustand des Energieversorgungsnetzes (11) hinweisen; und
- der Applikationsserver (13) bei einem Hinweis auf einen ungewollten Betriebszustand eine separate Alarm-Nachricht an eine Datenverarbeitungseinrichtung des Betreibers des Energieversorgungsnetzes (11) versendet.

10. Verfahren nach einem der vorangehenden Ansprüche,
**dadurch gekennzeichnet, dass**
- die Sensoren (12a-c) auch den eigenen Betriebszustand angebende Zustandswerte ermitteln;
- die Zustandswerte an den Applikationsserver (13) übermittelt werden;
- mittels des Applikationsservers (13) eine Auswertung und/oder eine Bearbeitung der Zustandswerte unter Bildung von Sensor-Statuswerten vorgenommen wird, die den Betriebszustand des jeweiligen Sensors (12a-c) angeben;
- die Sensor-Statuswerte von dem Applikationsserver (13) an die Beobachtungseinrichtung (14) des Betreibers des Energieversorgungsnetzes (11) übermittelt werden; und
- mittels der Beobachtungseinrichtung (14) anhand der von dem Applikationsserver (13) empfangenen Sensor-Statuswerte eine den Betriebszustand des jeweiligen Sensors (12a-c) angebende Visualisierung erzeugt und angezeigt wird.

11. Verfahren nach einem der vorangehenden Ansprüche,
**dadurch gekennzeichnet, dass**
- der Applikationsserver (13) mehrere voneinander abgetrennte Datenbereiche aufweist, die gegen einen Zugriff aufeinander abgesichert sind;
- Sensoren (12a-c) unterschiedlicher Betreiber von Energieversorgungsnetzen ihre Messwerte oder davon abgeleiteten Messwerte an den Applikationsserver (13) übermitteln, wobei der Applikationsserver (13) die empfangenen Messwerte oder davon abgeleiteten Werte jeweils ausschließlich einem dem jeweiligen Betreiber eines Energieversorgungsnetzes zugeordneten Datenbereich zuordnet; und
- der Applikationsserver (13) für jeden Datenbereich getrennt die System-Statuswerte bildet und die System-Statuswerte ausschließlich an eine Beobachtungseinrichtung (14) desjenigen Betreibers eines Energieversorgungsnetzes übermittelt, dem der entsprechende Datenbereich zugeordnet ist.

12. System (10) zur Beobachtung des Betriebszustands eines Energieversorgungsnetzes (11), mit
- Sensoren (12a-c), die an Primärkomponenten des Energieversorgungsnetzes (11) zugeordneten Messstellen vorgesehen und dazu eingerichtet sind, einen Betriebszustand des Energieversorgungsnetzes (11) angebende Messwerte zu erfassen; und mit
- einer Beobachtungseinrichtung (14) des Betreibers des Energieversorgungsnetzes (11), die dazu eingerichtet ist, basierend auf den Messwerten oder davon abgeleiteten Werten eine den Betriebszustand des Energieversorgungsnetzes (11) an der Messstelle des jeweiligen Sensors (12a-c) angebende Visualisierung zu erzeugen, wobei
- ein Applikationsserver (13) vorgesehen ist, dessen Betreiber vom Betreiber des Energieversorgungsnetzes (11) verschieden ist;
- die Sensoren (12a-c) dazu eingerichtet sind, die Messwerte oder davon abgeleiteten Werte zunächst an den Applikationsserver (13) zu übermitteln;
- der Applikationsserver (13) dazu eingerichtet ist, eine Auswertung und/oder eine Bearbeitung der Messwerte oder der daraus abgeleiteten Werte unter Bildung von System-Statuswerten, die den Betriebszustand des Energieversorgungsnetzes (11) an der Messstelle des jeweiligen Sensors (12a-c) angeben, vorzunehmen;
- der Applikationsserver (13) auch dazu eingerichtet ist, die System-Statuswerte an die Beobachtungseinrichtung (14) des Betreibers des Energieversorgungsnetzes (11) zu übermitteln; und
- die Beobachtungseinrichtung (14) dazu eingerichtet ist, anhand der von dem Applikationsserver (13) empfangenen System-Statuswerte die den Betriebszustand des Energieversorgungsnetzes (11) an der Messstelle des jeweiligen Sensors (12a-c) angebende Visualisierung zu erzeugen und anzuzeigen;
**dadurch gekennzeichnet, dass**
- der Applikationsserver (13) mit einer Konfigurationseinrichtung zusammenwirkt, die bei einer Neuanschaffung eines Sensors (12a-c) durch den Betreiber des Energieversorgungsnetzes (11) eine eindeutige Sensor-Kennung gemeinsam mit einer den Betreiber des Energieversorgungsnetzes (11) angebenden Betreiber-Kennung an den Applikationsserver (13) übermittelt; und
- der Sensor (12a-c) sich bei seiner Inbetriebnahme unter Verwendung seiner eindeutigen Sensor-Kennung beim Applikationsserver (13) anmeldet.

13. System (10) nach Anspruch 12,
**dadurch gekennzeichnet, dass**
- zumindest einige der Sensoren (12a-c) Fehlerindikatoren sind, die an Leitungen des Energieversorgungsnetzes (11) angebracht und dazu eingerichtet sind, Messwerte zu erfassen, die einen Stromfluss durch die Leitung angeben.

14. System nach Anspruch 12 oder 13,
**dadurch gekennzeichnet, dass**
- der Applikationsserver (13) mehrere voneinander abgetrennte Datenbereiche aufweist, die gegen einen Zugriff aufeinander abgesichert sind;
- der Applikationsserver (13) dazu eingerichtet ist, Messwerte oder davon abgeleiteten Messwert von Sensoren (12a-c) unterschiedlicher Betreiber von Energieversorgungsnetzen zu empfangen und die empfangenen Messwerte oder davon abgeleiteten Werte jeweils ausschließlich einem dem jeweiligen Betreiber eines Energieversorgungsnetzes zugeordneten Datenbereich zuzuordnen; und
- der Applikationsserver (13) dazu eingerichtet ist, für jeden Datenbereich getrennt die System-Statuswerte zu bilden und die System-Statuswerte ausschließlich an eine Beobachtungseinrichtung (14) desjenigen Betreibers eines Energieversorgungsnetzes zu übermitteln, dem der entsprechende Datenbereich zugeordnet ist.

## Claims

1. Method for monitoring the operating status of an energy delivery network (11), in which method
- sensors (12a-c), which are provided at measurement locations assigned to primary components of the energy delivery network (11), acquire measured values indicating an operating status of the energy delivery network (11); and
- on the basis of the measured values or values derived therefrom, a monitoring device (14) of the operator of the energy delivery network (11) generates a visualization that indicates the operating status of the energy delivery network (11) at the measurement location of the particular sensor (12a-c),
wherein
- the measured values or values derived therefrom are transmitted from the sensors (12a-c) first to an application server (13), the operator of which is different from influence of the operator of the energy delivery network (11);
- the application server (13) analyses and/or processes the measured values or the values derived therefrom, thereby forming system status values which indicate the operating status of the energy delivery network (11) at the measurement location of the particular sensor (12a-c);
- the system status values are transmitted from the application server (13) to the monitoring device (14) of the operator of the energy delivery network (11); and
- the monitoring device (14) uses the system status values received from the application server (13) to generate and display the visualization indicating the operating status of the energy delivery network (11) at the measurement location of the particular sensor (12a-c);
**characterized in that**
- the application server (13) interacts with a configuration device, which, when the operator of the energy delivery network (11) procures a new sensor (12a-c), transmits to the application server (13) a unique sensor identifier together with an operator identifier specifying the operator of the energy delivery network (11); and
- on being put into operation, the sensor (12a-c) uses its unique sensor identifier to register with the application server (13).

2. Method according to Claim 1,
**characterized in that**
- each sensor (12a-c) comprises a long-range communication device; and
- the measured values or the values derived therefrom are transmitted from the sensors (12a-c) to the application server (13) using a long-range communication link established by the long-range communication device.

3. Method according to Claim 1,
**characterized in that**
- each sensor (12a-c) comprises a short-range communication device;
- the sensors (12a-c) use a short-range communication link established to a transmission component (20) by means of the short-range communication device to transmit the measured values they have acquired or the values derived therefrom to the transmission component (20); and
- the transmission component (20) transmits the received measured values or the values derived therefrom to the application server (13).

4. Method according to any of the preceding claims,
**characterized in that**
- the sensors (12a-c) attach to the measured values to be transmitted to the application server (13) or the values derived therefrom a unique sensor identifier and/or position information identifying the geographical position of the measurement location of the sensor (12a-c) concerned.

5. Method according to any of the preceding claims,
**characterized in that**
- the sensors (12a-c) transmit the acquired measured values to the application server (13);
- the application server (13) checks the received measured values with regard to their position in an admissible operating range of the particular primary component to which the sensor (12a-c) concerned is assigned; and
- the application server (13) forms the system status values according to the result of the check.

6. Method according to any of Claims 1-4,
**characterized in that**
- the sensors (12a-c) check the acquired measured values themselves with regard to their position in an admissible operating range of the particular primary component to which the sensor (12a-c) concerned is assigned;
- the sensors (12a-c) form the values derived from the acquired measured values according to the result of the check;
- the sensors (12a-c) transmit the derived values to the application server (13); and
- the application server (13) uses the received derived values to form the system status values.

7. Method according to any of the preceding claims,
**characterized in that**
- the application server (13) provides topology information describing the layout of the energy delivery network (11); and
- the application server (13) uses the received measured values or the values derived therefrom and the topology information to form the system status values by assigning a graphical representation of the operating status of the energy delivery network (11) at the measurement location of the particular sensor to a position in the topology information, which position corresponds to the measurement location.

8. Method according to any of the preceding claims,
**characterized in that**
- the application server (13) stores in a database, histories of past measured values or values derived therefrom and/or histories of past system status values, and provides same for retrieval by the monitoring device (14) of the operator of the energy delivery network (11).

9. Method according to any of the preceding claims,
**characterized in that**
- when forming the system status values, the application server (13) checks whether the system status values indicate an unwanted operating status of the energy delivery network (11); and
- on an unwanted operating status being indicated, the application server (13) sends a separate alarm message to a data processing device of the operator of the energy delivery network (11).

10. Method according to any of the preceding claims,
**characterized in that**
- the sensors (12a-c) also determine state values indicating their own operating status;
- the state values are transmitted to the application server (13);
- the application server (13) analyses and/or processes the state values, thereby forming sensor status values which indicate the operating status of the particular sensor (12a-c) ;
- the sensor status values are transmitted from the application server (13) to the monitoring device (14) of the operator of the energy delivery network (11); and
- the monitoring device (14) uses the sensor status values received from the application server (13) to generate and display a visualization indicating the operating status of the particular sensor (12a-c).

11. Method according to any of the preceding claims,
**characterized in that**
- the application server (13) comprises a plurality of mutually separate data areas, which are protected from accessing one another;
- sensors (12a-c) belonging to different operators of energy delivery networks transmit their measured values or measured values derived therefrom to the application server (13), wherein the application server (13) assigns the received measured values or values derived therefrom for each operator solely to a data area associated with that particular operator of an energy delivery network; and
- the application server (13) forms separately for each data area the system status values, and transmits the system status values solely to a monitoring device (14) of that operator of an energy delivery network associated with the relevant data area.

12. System (10) for monitoring the operating status of an energy delivery network (11), which system comprises
- sensors (12a-c), which are provided at measurement locations assigned to primary components of the energy delivery network (11) and are designed to acquire measured values indicating an operating status of the energy delivery network (11); and comprises
- a monitoring device (14) of the operator of the energy delivery network (11), which is designed to generate on the basis of the measured values or values derived therefrom a visualization that indicates the operating status of the energy delivery network (11) at the measurement location of the particular sensor (12a-c), wherein
- an application server (13) is provided the operator of which is different from the operator of the energy delivery network (11);
- the sensors (12a-c) are designed to transmit the measured values or values derived therefrom first to the application server (13);
- the application server (13) is designed to analyze and/or process the measured values or the values derived therefrom, thereby forming system status values which indicate the operating status of the energy delivery network (11) at the measurement location of the particular sensor (12a-c);
- the application server (13) is also designed to transmit the system status values to the monitoring device (14) of the operator of the energy delivery network (11); and
- the monitoring device (14) is designed to use the system status values received from the application server (13) to generate and display the visualization indicating the operating status of the energy delivery network (11) at the measurement location of the particular sensor (12a-c) ;
**characterized in that**
- the application server (13) interacts with a configuration device, which, when the operator of the energy delivery network (11) procures a new sensor (12a-c), transmits to the application server (13) a unique sensor identifier together with an operator identifier specifying the operator of the energy delivery network (11); and
- on being put into operation, the sensor (12a-c) uses its unique sensor identifier to register with the application server (13).

13. System (10) according to Claim 12,
**characterized in that**
- at least some of the sensors (12a-c) are fault indicators, which are mounted on lines of the energy delivery network (11) and are designed to acquire measured values that indicate a current flow through the line.

14. System according to either Claim 12 or 13,
**characterized in that**
- the application server (13) comprises a plurality of mutually separate data areas, which are protected from accessing one another;
- the application server (13) is designed to receive measured values or measured values derived therefrom from sensors (12a-c) belonging to different operators of energy delivery networks, and to assign the received measured values or values derived therefrom for each operator solely to a data area associated with that particular operator of an energy delivery network; and
- the application server (13) is designed to form separately for each data area the system status values, and to transmit the system status values solely to a monitoring device (14) of that operator of an energy delivery network associated with the relevant data area.

## Revendications

1. Procédé d'observation de l'état de fonctionnement d'un réseau (11) d'alimentation en énergie, dans lequel
- au moyen de capteurs (12a-c), qui sont prévus en des points de mesure associés à des composants primaires du réseau (11) d'alimentation en énergie, on relève les valeurs de mesure indiquant un état de fonctionnement du réseau (11) d'alimentation en énergie ; et
- sur la base des valeurs de mesure ou de valeurs qui s'en déduisent, on produit, au moyen d'un dispositif (14) d'observation de l'opérateur du réseau (11) d'alimentation en énergie, une visualisation indiquant l'état de fonctionnement du réseau (11) d'alimentation en énergie au point de mesure du capteur (12a-c) respectif,
dans lequel
- on détermine des valeurs de mesure ou des valeurs qui s'en déduisent, par les capteurs (12a-c), d'abord sur un serveur (13) d'application, dont l'opérateur est différent de l'opérateur du réseau (11) d'alimentation en énergie ;
- au moyen du serveur (13) d'application, on effectue une exploitation et/ou un traitement des valeurs de mesure ou des valeurs qui s'en déduisent en formant des valeurs de statut de système, qui indiquent l'état de fonctionnement du réseau (11) d'alimentation en énergie au point de mesure du capteur (12a-c) respectif ;
- on transmet les valeurs de statut de système du serveur (13) d'application au dispositif (14) d'observation de l'opérateur du réseau (11) d'alimentation en énergie ; et
- au moyen du dispositif (14) d'observation, à l'aide des valeurs de statut de système reçues par le serveur (13) d'application, on produit et on affiche la visualisation indiquant l'état de fonctionnement du réseau (11) d'alimentation en énergie au point de mesure du capteur (12a-c) respectif ;
**caractérisé en ce que**
- le serveur (13) d'application coopère avec un dispositif de configuration, qui, lors d'une nouvelle acquisition d'un capteur (12a-c) par l'opérateur du réseau (11) d'alimentation en énergie, transmet au serveur (13) d'application une caractérisation de capteur univoque, conjointement avec une caractérisation d'opérateur indiquant l'opérateur du réseau (11) d'alimentation en énergie ; et
- le capteur (12a-c) s'annonce auprès du serveur (13) d'application lors de sa mise en fonctionnement, en utilisant sa caractérisation de capteur univoque.

2. Procédé suivant la revendication 1,
**caractérisé en ce que**
- chaque capteur (12a-c) a un dispositif de communication dans le domaine lointain ; et
- la transmission des valeurs de mesure ou des valeurs qui s'en déduisent, par les capteurs (12a-c) au serveur (13) d'application, s'effectue en utilisant une liaison de communication dans le domaine lointain, constituée au moyen du dispositif de communication dans le domaine lointain.

3. Procédé suivant la revendication 1,
**caractérisé en ce que**
- chaque capteur (12a-c) a un dispositif de communication dans le domaine proche ;
- les capteurs (12a-c) transmettent les valeurs de mesure qu'ils ont relevées ou les valeurs qui s'en déduisent, en utilisant une liaison de communication dans le domaine proche, constituée au moyen du dispositif de communication dans le domaine proche, ayant un composant (20) de transmission, au composant (20) de transmission ; et
- le composant (20) de transmission transmet les valeurs de mesure ou les valeurs qui s'en déduisent et qui ont été reçues au serveur (13) d'application.

4. Procédé suivant l'une des revendications précédentes,
**caractérisé en ce que**
- les capteurs (12a-c) joignent aux valeurs de mesure ou aux valeurs qui s'en déduisent transmises au serveur (13) d'application une caractérisation de capteur univoque et/ou une information de lieu caractérisant la position géographique du point de mesure du capteur (12a-c) respectif.

5. Procédé suivant l'une des revendications précédentes,
**caractérisé en ce que**
- les capteurs (12a-c) transmettent les valeurs de mesure relevées au serveur (13) d'application ;
- le serveur (13) d'application contrôle les valeurs de mesure reçues en ce qui concerne leur position dans l'une des plages de fonctionnement admissibles du composant primaire respectif, qui est associé au capteur (12a-c) respectif ; et
- le serveur (13) d'application forme les valeurs de statut de système en fonction du résultat du contrôle.

6. Procédé suivant l'une des revendications 1 à 4,
**caractérisé en ce que**
- les capteurs (12a-c) contrôle les valeurs de mesure relevées elles-mêmes en ce qui concerne leur position dans une plage de fonctionnement admissible du composant primaire respectif, qui est associé au capteur (12a-c) respectif ;
- les capteurs (12-c) forment les valeurs déduites des valeurs de mesure relevées en fonction du résultat du contrôle ;
- les capteurs (12a-c) transmettent les valeurs déduites au serveur (13) d'application ; et
- le serveur (13) d'application forment les valeurs de statut de système en utilisant les valeurs déduites, qui ont été reçues.

7. Procédé suivant l'une des revendications précédentes,
**caractérisé en ce que**
- le serveur (13) d'application procure une information de topologie décrivant la structure du réseau (11) d'alimentation en énergie ; et
- le serveur (13) d'application forme les valeurs d'état de système en utilisant les valeurs de mesure reçues ou les valeurs qui s'en déduisent et la formation de topologie, en associant une représentation graphique de l'état de fonctionnement du réseau (11) d'alimentation en énergie au point de mesure du capteur respectif à une position correspondant au point de mesure dans l'information de topologie.

8. Procédé suivant l'une des revendications précédentes,
**caractérisé en ce que**
- le serveur (13) d'application met en mémoire, dans une base de données, des courbes de valeurs de mesure passées ou de valeurs qui s'en déduisent et/ou des courbes de valeur d'état de système passées et les met à disposition pour un appel par le dispositif (14) d'observation de l'opérateur du réseau (11) d'alimentation en énergie.

9. Procédé suivant l'une des revendications précédentes,
**caractérisé en ce que**
- le serveur (13) d'application effectue, lors de la formation des valeurs de statut de système, un contrôle sur le point de savoir si les valeurs de statut de système indiquent un état de fonctionnement que l'on ne veut pas du réseau (11) d'alimentation en énergie ; et
- le serveur (13) d'application envoie, lorsqu'un état de fonctionnement que l'on ne veut pas est indiqué, un message d'alerte distinct à un dispositif de traitement de données de l'opérateur du réseau (11) d'alimentation en énergie.

10. Procédé suivant l'une des revendications précédentes,
**caractérisé en ce que**
- les capteurs (12a-c) déterminent également des valeurs d'état indiquant leur état de fonctionnement propre ;
- les valeurs d'état sont transmises au serveur (13) d'application ;
- au moyen du serveur (13) d'application, il est effectué une exploitation et/ou un traitement des valeurs d'état avec formation de valeurs de statut de capteur, qui indiquent l'état de fonctionnement du capteur (12a-c) respectif ;
- les valeurs de statut de capteur sont transmises du serveur (13) d'application au dispositif (14) d'observation de l'opérateur du réseau (11) d'alimentation en énergie ; et
- au moyen du dispositif (14) d'observation, à l'aide des valeurs de statut de capteur reçues par le serveur (13) d'application, on produit et on affiche une visualisation indiquant l'état de fonctionnement du capteur (12a-c) respectif.

11. Procédé suivant l'une des revendications précédentes,
**caractérisé en ce que**
- le serveur (13) d'application a plusieurs parties de données séparées les unes des autres, qui sont sécurisées les unes par rapport aux autres vis-à-vis d'un accès ;
- des capteurs (12a-c) d'opérateurs différents de réseaux d'alimentation en énergie transmettent leurs valeurs de mesure ou des valeurs de mesure qui s'en déduisent au serveur (13) d'application, le serveur (13) d'application associant les valeurs de mesure reçues ou des valeurs qui s'en déduisent, respectivement, exclusivement à une partie de données associée à l'opérateur respectif d'un réseau d'alimentation en énergie ; et
- le serveur (13) d'application forme les valeurs de statut de système séparément pour chaque partie de données et associe les valeurs de statut de système, exclusivement, à un dispositif (14) d'observation de l'opérateur d'un réseau d'alimentation en énergie, auquel la partie de données correspondante est associée.

12. Système (10) d'observation de l'état de fonctionnement d'un réseau (11) d'alimentation en énergie, comprenant
- des capteurs (12a-c), qui sont prévus en des points de mesure associés à des composants primaires du réseau (11) d'alimentation en énergie et qui sont conçus pour détecter des valeurs de mesure indiquant un état de fonctionnement du réseau (11) d'alimentation en énergie ; et comprenant
- un dispositif (14) d'observation de l'opérateur du réseau (11) d'alimentation en énergie, dispositif conçu pour, sur la base des valeurs de mesure ou de valeurs qui s'en déduisent, produire une visualisation indiquant l'état de fonctionnement du réseau (11) d'alimentation en énergie au point de mesure du capteur (12a-c) respectif, dans lequel
- il est prévu un serveur (13) d'application, dont l'opérateur est différent de l'opérateur du réseau (11) d'application d'alimentation en énergie ;
- les capteurs (12a-c) sont conçus pour transmettre les valeurs de mesure ou des valeurs qui s'en déduisent, d'abord au serveur (13) d'application ;
- le serveur (13) d'application est conçu pour effectuer une exploitation et/ou un traitement des valeurs de mesure ou des valeurs qui s'en déduisent en formant des valeurs de statut de système, qui indiquent l'état de fonctionnement du réseau (11) d'alimentation en énergie au point de mesure du capteur (12a-c) respectif ;
- le serveur (13) d'application est conçu également pour transmettre des valeurs de statut de système au dispositif (14) d'observation de l'opérateur du réseau (11) d'alimentation en énergie ; et
- le dispositif (14) d'observation est conçu pour produire et afficher, à l'aide des valeurs de statut de système reçues par le serveur (13) d'application, la visualisation indiquant l'état de fonctionnement du réseau (11) d'alimentation en énergie au point de mesure du capteur (12a-c) respectif ;
**caractérisé en ce que**
- le serveur (13) d'application coopère avec un dispositif de configuration, qui, lorsque l'opérateur du réseau (11) d'alimentation en énergie se procure un nouveau capteur (12a-c), transmet au serveur (13) d'application une caractérisation de capteur univoque, conjointement à une caractérisation d'opérateur indiquant l'opérateur du réseau (11) d'alimentation en énergie ; et
- le capteur (12a-c) s'annonce, lors de sa mise en fonctionnement, auprès du serveur (13) d'application en utilisant sa caractérisation de capteur univoque.

13. Système (10) suivant la revendication 12,
**caractérisé en ce que**
- au moins certains des capteurs (12a-c) sont des indicateurs de défaut, qui sont montés sur des lignes du réseau (11) d'alimentation en énergie et qui sont conçus pour relever des valeurs de mesure, qui indiquent un flux de courant dans la ligne.

14. Système suivant la revendication 12 ou 13,
**caractérisé en ce que**
- le serveur d'application a plusieurs parties de données séparées les unes des autres, qui sont sécurisées les unes par rapport aux autres vis-à-vis d'un accès ;
- le serveur (13) d'application est conçu pour recevoir des valeurs de mesure ou une valeur de mesure qui s'en déduit de capteurs (12a-c) d'opérateurs différents de réseaux d'alimentation en énergie et pour associer les valeurs de mesure reçues ou des valeurs qui s'en déduisent, respectivement, exclusivement à une partie de données associée à l'opérateur respectif d'un réseau d'alimentation en énergie ; et
- le serveur (13) d'application est conçu pour former, pour chaque partie de données séparément, les valeurs de statut de système et pour transmettre les valeurs de statut de système exclusivement à un dispositif (14) d'observation de l'opérateur d'un réseau d'alimentation en énergie, qui est associé à la partie de données correspondante.
